(19) Europäisches Patentamt
European Patent Office
Office européen des brevets

(11) **EP 3 315 523 A1**

(12) **EUROPEAN PATENT APPLICATION**
published in accordance with Art. 153(4) EPC

(43) Date of publication:
**02.05.2018 Bulletin 2018/18**

(21) Application number: **16813924.4**

(22) Date of filing: **14.06.2016**

(51) Int Cl.:
**C08F 290/06** *(2006.01)* **B32B 27/00** *(2006.01)*
**C08F 299/08** *(2006.01)* **C08G 77/08** *(2006.01)*
**C09D 4/00** *(2006.01)* **C09D 7/12** *(2006.01)*
**C09D 183/04** *(2006.01)* **C09D 183/05** *(2006.01)*
**C09D 183/07** *(2006.01)*

(86) International application number:
**PCT/JP2016/002875**

(87) International publication number:
**WO 2016/208150 (29.12.2016 Gazette 2016/52)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **23.06.2015 JP 2015125781**

(71) Applicant: **Nippon Soda Co., Ltd.
Tokyo 100-8165 (JP)**

(72) Inventor: **AOYAMA, Kazumasa
Ichihara-shi
Chiba 290-0045 (JP)**

(74) Representative: **Wibbelmann, Jobst
Wuesthoff & Wuesthoff
Patentanwälte PartG mbB
Schweigerstrasse 2
81541 München (DE)**

(54) **ORGANIC-INORGANIC COMPOSITE**

(57)    An object of the present invention is to provide an organic-inorganic hybrid forming composition, which is capable of forming an organic-inorganic hybrid with less yellow coloring than conventional ones, while maintaining the surface hardness. The organic-inorganic hybrid forming composition of the present invention comprises: a) a condensate of an organosilicon compound represented by the formula (I): $R_nSiX_{4-n}$ (I) (wherein R represents an organic group having a carbon atom directly bonded to Si in the formula; X each independently represents a hydroxyl group or a hydrolyzable group; and n represents 1 or 2, and when n is 2, each R is the same or different), which is obtained by condensing the organosilicon compound represented by the formula (I) in the presence of a zirconium complex; b) an electromagnetic ray-curable compound; and c) a photopolymerization initiator.

EP 3 315 523 A1

**Description**

**Technical Field**

The present invention relates to a composition which contains an organic component and an inorganic component in a single layer and may form a thin film of an organic-inorganic hybrid which is mineralized on the front surface side.

This application claims priority to Japanese Patent Application No. 2015-125781 filed on June 23, 2015, the contents of which are incorporated herein by reference.

**Background Art**

Currently, a trifunctional silane is mainly used as a raw material of commercially available silane-based coating agents, and a polysiloxane having an appropriate level of hardness and flexibility is formed from the trifunctional silane. However, a film formed from the trifunctional silane has insufficient hard coatability and the trifunctional silane is mixed with a tetrafunctional silane or colloidal silica to compensate therefor. However, when the film is harden, there is a problem that it becomes liable to crack and poor in adhesion. For example, as a silane-based coating agent, a stainproof membrane-forming composition containing a trifunctional alkoxysilane compound having an epoxy group has been proposed (see for example, Patent Document 1).

The present inventors have heretofore provided an organic-inorganic hybrid the front surface of which has very high hardness, the inner side and back surface of which have appropriate hardness, and which is excellent in adhesion to a substrate, by irradiating an organosilicon compound with ultraviolet ray in the presence of a photoresponsive compound (see for example, Patent Document 2), and have also provided an organic-inorganic hybrid the front surface of which has very high hardness, and which is excellent in adhesion to a substrate and moisture resistance, by blending an acrylate-based resin which is an ultraviolet curable resin into a polysiloxane-based organic-inorganic hybrid (see for example, Patent Document 3).

**Prior Art Documents**

**Patent Documents**

Patent Document 1: Japanese unexamined Patent Application Publication No. 10-195417
Patent Document 2: WO2006/088079
Patent Document 3: WO2008/069217

**Summary of the Invention**

**Object to be Solved by the Invention**

However, since conventional organic-inorganic hybrid comprises a metal compound which is a silanol condensation catalyst and an acid, there has been a problem that the formed organic-inorganic hybrid have yellow coloring derived from the metal compound. An object of the present invention is to provide an organic-inorganic hybrid forming composition, which is capable of forming an organic-inorganic hybrid with less yellow coloring than conventional ones, while maintaining the surface hardness.

**Means to Solve the Object**

The present inventors have made diligent research to solve the above problems and as a result, have found that when a zirconium complex is used as a silanol condensation catalyst, yellow coloring when a thin film is formed can be reduced, and thereby have completed the present invention.

The present invention relates to:

(1) An organic-inorganic hybrid forming composition comprising:

a) a condensate of an organosilicon compound represented by the formula (I):

$$R_nSiX_{4-n} \qquad (I)$$

(wherein R represents an organic group having a carbon atom directly bonded to Si in the formula; X each independently represents a hydroxyl group or a hydrolyzable group; and n represents 1 or 2, and when n is 2, each R is the same or different),
which is obtained by condensing the organosilicon compound represented by the formula (I) in the presence of a zirconium complex;
b) an electromagnetic ray-curable compound; and
c) a photopolymerization initiator;

(2) The organic-inorganic hybrid forming composition according to (1), wherein at least one of the organosilicon compounds represented by the formula (I) is an organosilicon compound represented by the formula (I-1) :

$$R^1{}_nSiX_{4-n}\cdots \qquad (I-1)$$

(wherein n represents 1 or 2, and when n is 2, each $R^1$ is the same or different; $R^1$ represents an organic group having a carbon atom directly bonded to Si in the formula, and at least one $R^1$ represents a vinyl group-containing hydrocarbon group; and X each independently represents a hydroxyl group or a hydrolyzable group);
(3) The organic-inorganic hybrid forming composition according to (2), wherein the organosilicon compound represented by the formula (I) consists of: at least one organosilicon compound represented by the formula (I-1):

$$R^1{}_nSiX_{4-n}\cdots \qquad (I-1)$$

(wherein n represents 1 or 2, and when n is 2, each $R^1$ is the same or different; $R^1$ represents an organic group having a carbon atom directly bonded to Si in the formula, and at least one $R^1$ represents a vinyl group-containing hydrocarbon group; and X each independently represents a hydroxyl group or a hydrolyzable group); and
at least one organosilicon compound represented by the formula (I-2):

$$R^2{}_nSiX_{4-n}\cdots \qquad (I-2)$$

(wherein n represents 1 or 2, and when n is 2, each $R^2$ is the same or different; $R^2$ represents an organic group, other than a vinyl group-containing hydrocarbon group, having a carbon atom directly bonded to Si in the formula; and X each independently represents a hydroxyl group or a hydrolyzable group),
in an amount satisfying the equation (1):

```
    30 mol% ≤ {[Compound of formula (I-1)]} / {[Compound

 of formula (I-1)] + [Compound of formula (I-2)]} × 100 <

 100 mol%···(1);
```

(4) The organic-inorganic hybrid forming composition according to (1), wherein at least one of the organosilicon compounds represented by the formula (I) is an organosilicon compound having a solubility parameter (SP1) of R obtained by Fedors' estimation method which is 1.6 or more smaller than a solubility parameter (SP2) of the electromagnetic ray-curable compound obtained by Fedors' estimation method;
(5) an organic-inorganic hybrid obtained by curing the organic-inorganic hybrid forming composition according to any one of (1) to (4); and
(6) a laminate obtained by applying the organic-inorganic hybrid forming composition according to any one of (1) to (4) to a substrate and curing the composition.

**Effect of the Invention**

The present invention may provide an organic-inorganic hybrid which is excellent in adhesion to a substrate, thermal yellowing resistance and light yellowing resistance, and has high surface hardness and transparency.

**Mode of Carrying Out the Invention**

(1) Organosilicon compound

The organosilicon compound used in the present invention is an organosilicon compound represented by the following formula (I). The organosilicon compound may be used alone or used by combination of two or more thereof.

$$R_nSiX_{4-n}\cdots \qquad (I)$$

In the formula (I), R represents an organic group having a carbon atom directly bonded to Si in the formula; X each independently represents a hydroxyl group or a hydrolyzable group; and n represents 1 or 2, and when n is 2, each R is the same or different.

As for "an organic group having a carbon atom directly bonded to Si" represented by R, as used herein, an optionally substituted hydrocarbon group or the like may be exemplified.

A hydrocarbon group of the "optionally substituted hydrocarbon group" is, generally, a hydrocarbon group having 1 to 30 carbon atoms, and an alkyl group, a cycloalkyl group, a cycloalkylalkyl group, an alkenyl group, an alkynyl group, an aryl group, an arylalkyl group, an arylalkenyl group or the like may be exemplified.

Among them, the hydrocarbon group is preferably an alkyl group having 1 to 10 carbon atoms, a cycloalkyl group having 3 to 8 carbon atoms, an alkenyl group having 2 to 10 carbon atoms, a cycloalkenyl group having 3 to 8 carbon atoms and an alkynyl group having 2 to 10 carbon atoms.

The "hydrocarbon group" may also comprise an oxygen atom, a nitrogen atom or a silicon atom.

As for the "alkyl group having 1 to 10 carbon atoms", specifically, a methyl group, an ethyl group, a n-propyl group, an isopropyl group, a n-butyl group, an isobutyl group, a t-butyl group, a n-pentyl group, an isopentyl group, a neopentyl group, a n-hexyl group, an isohexyl group, a n-heptyl group, a n-octyl group, a n-nonyl group, an isononyl group, a n-decyl group or the like may be exemplified.

As for the "cycloalkyl group having 3 to 8 carbon atoms", specifically, a cyclopropyl group, a cyclobutyl group, a cyclopentyl group, a cyclohexyl group, a cycloheptyl group, a cyclooctyl group or the like may be exemplified.

As for the "alkenyl group having 2 to 10 carbon atoms", specifically, a vinyl group, a 1-propen-1-yl group, a 2-propen-1-yl group, a 1-propen-2-yl group, a 1-buten-1-yl group, a 2-buten-1-yl group, a 3-buten-1-yl group, a 1-buten-2-yl group, a 3-buten-2-yl group, a 1-penten-1-yl group, a 4-penten-1-yl group, a 1-penten-2-yl group, a 4-penten-2-yl group, a 3-methyl-1-buten-1-yl group, a 1-hexen-1-yl group, a 5-hexen-1-yl group, a 1-hepten-1-yl group, a 6-hepten-1-yl group, a 1-octen-1-yl group, a 7-octen-1-yl group or the like may be exemplified.

As for the "cycloalkenyl group having 3 to 8 carbon atoms", specifically, a 1-cyclopenten-1-yl group, a 2-cyclopenten-1-yl group, a 1-cyclohexen-1-yl group, a 2-cyclohexen-1-yl group, a 3-cyclohexen-1-yl group or the like may be exemplified.

As for the "alkynyl group having 2 to 10 carbon atoms", specifically, an ethynyl group, a 1-propyne-1-yl group, a 2-propyn-1-yl group, a 1-butyn-1-yl group, a 3-butyn-1-yl group, a 1-pentyn-1-yl group, a 4-pentyn-1-yl group, a 1-hexyn-1-yl group, a 5-hexyn-1-yl group, a 1-heptyn-1-yl group, a 1-octyn-1-yl group, a 7-octyn-1-yl group or the like may be exemplified.

As for the "cycloalkylalkyl group", a group made by a combination of a cycloalkyl group having 3 to 10 carbon atoms and an alkyl group having 1 to 10 carbon atoms may be exemplified.

"Aryl group" refers to a monocyclic or polycyclic aryl group, and in the case of the polycyclic aryl group, it includes not only a fully unsaturated ring but also a partly saturated ring. As the aryl group, specifically, a phenyl group, a naphthyl group, an azulenyl group, an indenyl group, an indanyl group, a tetralinyl group or the like may be exemplified, and an aryl group having 6 to 10 carbon atoms is preferred.

As for the "arylalkyl group", a group made by a combination of an aryl group having 6 to 10 carbon atoms and an alkyl group having 1 to 10 carbon atoms may be exemplified.

As for the "arylalkenyl group", a group made by a combination of an aryl group having 6 to 10 carbon atoms and an alkenyl group having 2 to 10 carbon atoms may be exemplified.

As for the "hydrocarbon group having an oxygen atom", an alkoxyalkyl group; a group having an oxirane ring (epoxy group), such as an epoxy group, an epoxyalkyl group and a glycidoxyalkyl group; an acryloxymethyl group, a methacryloxymethyl group or the like may be exemplified.

As for the "alkoxyalkyl group" as used herein, a group made by a combination of an alkoxy group having 1 to 6 carbon atoms and an alkyl group having 1 to 6 carbon atoms may be exemplified.

As for the "epoxyalkyl group", an epoxyalkyl group having 3 to 10 carbon atoms is preferred, and specifically, a linear alkyl group containing an epoxy group such as a glycidyl group, a glycidylmethyl group, a 2-glycidylethyl group, a 3-glycidylpropyl group, a 4-glycidylbutyl group, a 3,4-epoxybutyl group, a 4,5- epoxypentyl group, a 5,6-epoxyhexyl group; and a branched alkyl group containing an epoxy group such as a β-methylglycidyl group, a β-ethylglycidyl group, a β-propylglycidyl group, a 2-glycidylpropyl group, a 2-glycidylbutyl group, a 3-glycidylbutyl group, a 2-methyl-3-glycidylpropyl group, a 3-methyl-2-glycidylpropyl group, a 3-methyl-3,4-epoxybutyl group, a 3-ethyl-3,4-epoxybutyl group, a 4-methyl-4,5-epoxypentyl group, a 5-methyl-5,6-epoxyhexyl group; or the like may be exemplified.

As for the glycidoxyalkyl group, specifically, a glycidoxymethyl group, a glycidoxypropyl group or the like may be exemplified.

As for the "hydrocarbon group having a nitrogen atom", a hydrocarbon group having $-NR'_2$ (wherein R' represents a hydrogen atom, an alkyl group or an aryl group, and each R' is the same or different), or a hydrocarbon group having $-N=CR''_2$ (wherein R'' represents a hydrogen atom, an alkyl group or an aryl group, and each R'' is the same or different) may be exemplified.

For example, as for the group having $-NR'_2$, specifically, an aminomethyl group, a 1-aminoethyl group, an N-methylamino methyl group or the like may be exemplified. As the group having $-N=CR''_2$, specifically, $-CH_2N=CHCH_3$ group, $-CH_2N=C(CH_3)_2$ group, $-CH_2CH_2N=CHCH_3$ group, $-CH_2N=CHPh$ group, $-CH_2N=C(Ph)CH_3$ group or the like may be exemplified.

As for the substituent referred to by "optionally substituted", a halogeno group, an alkyl group, an alkenyl group, an aryl group, a methacryloxy group or the like may be exemplified. As the alkyl group, the alkenyl group and the aryl group, the same hydrocarbon group as described for R may be exemplified.

Among them, a group having a vinyl group or an oxirane ring is a preferable group, from the point of view of mineralization of the surface of the organic-inorganic hybrid.

In the formula (I), n represents 1 or 2, and n is particularly preferably 1. When n is 2, each R is the same or different.

In the formula (I), X each independently represents a hydroxyl group or a hydrolyzable group. The hydrolyzable group refers to groups which may be hydrolyzed, for example, by heating it at 25°C to 100°C in the presence of no catalyst and an excess of water, to produce a silanol group or to form a condensate of siloxane. As the hydrolyzable group, an alkoxy group, an acyloxy group, a halogeno group, an isocyanate group, an amino group or a substituted amino group or the like may be exemplified, and an alkoxy group having 1 to 4 carbon atoms and an acyloxy group having 1 to 6 carbon atoms are preferred.

As for the "alkoxy group having 1 to 4 carbon atoms", specifically, a methoxy group, an ethoxy group, a n-propoxy group, an isopropoxy group, a n-butoxy group, an isobutoxy group, a t-butoxy group or the like may be exemplified.

As for the "acyloxy group having 1 to 6 carbon atoms" (provided that the carbon atoms of the carbonyl group are not comprised in the carbon number), specifically, an acetoxy group, a benzoyloxy group or the like may be exemplified.

As for the "halogeno group", specifically, a fluoro group, a chloro group, bromo group, an iodo group or the like may be exemplified.

As for the organosilicon compound represented by the formula (I), specifically, methyltrichlorosilane, methyltrimethoxysilane, methyltriethoxysilane, methyltributoxysilane, ethyltrimethoxysilane, ethyltriisopropoxysilane, ethyltributoxysilane, butyltrimethoxysilane, pentafluorophenyltrimethoxysilane, phenyltrimethoxysilane, nonafluorobutylethyldimethoxysilane, trifluoromethyltrimethoxysilane, dimethyldiaminosilane, dimethyldichlorosilane, dimethyldiacetoxysilane, dimethyldimethoxysilane, diphenyldimethoxysilane, dibutyldimethoxysilane, vinyltrimethoxysilane, 3-(meth)acryloxy-n-propyltrimethoxysilane, 3-(3-methyl-3-oxetanemethoxy)-n-propyltrimethoxysilane, 4-oxacyclohexyltrimethoxysilane, methyltris[(meth)acryloxy]silane, methyltris [2-(meth)acryloxyethoxy]silane, methyltriglycidyloxysilane, methyltris(3-methyl-3-oxetanemethoxy)silane, vinyltrichlorosilane, vinyltriethoxysilane, 2-(3,4-epoxycyclohexyl)ethyltrimethoxysilane, 3-glycidoxy-n-propyltrimethoxysilane, 3-glycidoxy-n-propylmethyldiethoxysilane, 3-glycidoxy-n-propyltriethoxysilane, p-styryltrimethoxysilane, 3-methacryloxypropylmethyldimethoxysilane, 3-methacryloxypropylmethyldiethoxysilane, 3-methacryloxypropyltriethoxysilane, N-(2-aminoethyl)-3-aminopropylmethyldimethoxysilane, N-(2-aminoethyl)-3-aminopropyltrimethoxysilane, N-(2-aminoethyl)-3-aminopropyltriethoxysilane, 3-aminopropyltrimethoxysilane, 3-aminopropyltriethoxysilane, 3-triethoxysilyl-N-(1,3-dimethylbutylidene)propylamine, 3-anilinopropyltrimethoxysilane or the like may be exemplified.

In the present invention, a mixture of particular organosilicon compounds is preferably used.

The mixture is a mixture of an organosilicon compound represented by the formula (I-1) and an organosilicon compound represented by the formula (1-2) in an amount satisfying the following equation (1):

$$R^1{}_n SiX_{4-n} \ldots \qquad (I\text{-}1)$$

$$R^2{}_n SiX_{4-n} \ldots \qquad (I\text{-}2)$$

$$30 \text{ mol\%} \leq \{[\text{Compound of formula (I-1)}]\} / \{[\text{Compound of formula (I-1)}] + [\text{Compound of formula (I-2)}]\} \times 100 < 100 \text{ mol\%}\cdots(1).$$

In the formula (I-1), n represents 1 or 2, and when n is 2, each $R^1$ is the same or different; $R^1$ represents an organic group having a carbon atom directly bonded to Si in the formula, and one or more of $R^1$ represents a vinyl group-containing hydrocarbon group; and each X represents a hydroxyl group or a hydrolyzable group and is the same or different.

In the formula (I-2), n represents 1 or 2, and when n is 2, $R^2$ is the same or different; $R^2$ represents an organic group, other than a vinyl group-containing hydrocarbon group, having a carbon atom directly bonded to Si in the formula; and each X represents a hydroxyl group or a hydrolyzable group and is the same or different.

As for the organic group and hydrolyzable group in the above $R^1$, the same organic group and hydrolyzable group as the organic group and hydrolyzable group in the formula (I) may be exemplified.

As for the vinyl group-containing hydrocarbon group in the above $R^1$, an alkenyl group having 2 to 10 carbon atoms, a cycloalkenyl group having 3 to 8 carbon atoms or the like may be exemplified.

As for the compound represented by the formula (I-1), specifically, vinyltrimethoxysilane, vinyltrichlorosilane, vinyltriethoxysilane, vinyltributoxysilane, vinyltriisopropoxysilane, allyltrimethoxysilane, 3-butenyltrimethoxysilane, 2-cyclopropenyltrimethoxysilane, 2-cyclopentenyltrimethoxysilane, 2-cyclohexenyltrimethoxysilane, divinyldiaminosilane, divinyldichlorosilane, divinyldiacetoxysilane, divinyldimethoxysilane, diallyldimethoxysilane, di(3-butenyl)dimethoxysilane, allylethyltriethoxysilane or the like may be exemplified.

As for the compound represented by the formula (1-2), specifically, methyltrichlorosilane, methyltrimethoxysilane, methyltriethoxysilane, methyltributoxysilane, ethyltrimethoxysilane, ethyltriisopropoxysilane, ethyltributoxysilane, n-butyltrimethoxysilane, pentafluorophenyltrimethoxysilane, phenyltrimethoxysilane, nonafluorobutylethyltrimethoxysilane, trifluoromethyltrimethoxysilane, dimethyldiaminosilane, dimethyldichlorosilane, dimethyldiacetoxysilane, dimethyldimethoxysilane, diphenyldimethoxysilane, dibutyldimethoxysilane, trimethylchlorosilane, 3-(meth)acryloxy-n-propyltrimethoxysilane, 3-glycidoxy-n-propyltrimethoxysilane, 3-(3-methyl-3-oxetanemethoxy)-n-propyltrimethoxysilane, oxacyclohexyltrimethoxysilane, methyltri(meth)acryloxysilane, methyl[2-(meth)acryloxyethoxy]silane, methyltriglycidyloxysilane, methyltris(3-methyl-3-oxetanemethoxy)silane or the like may be exemplified.

In the present invention, a mixture of vinyltrimethoxysilane and 3-methacryloxy-n-propyltrimethoxysilane, a mixture of vinyltrimethoxysilane and 3-glycidoxy-n-propyltrimethoxysilane and the like are preferred.

(2) Zirconium complex

The zirconium complex used in the present invention is a metal complex consisting of zirconium and a chelating ligand which is optionally coordinated with a σ-bonding ligand or a Lewis base as a ligand.

The chelating ligand is an essential ligand for increasing the reactivity of the zirconium complex. As the chelating ligand, a β-ketoester compound, a β-ketocarbonyl compound or α-hydroxyester compound or the like may be exemplified. As for the β-ketoester compound, methyl acetoacetate, n-propyl acetoacetate, isopropyl acetoacetate, n-butyl acetoacetate, sec-butyl acetoacetate, t-butyl acetoacetate or the like may be exemplified; as the β-ketocarbonyl compound, acetylacetone, hexane-2,4-dione, heptane-2,4-dione, heptane-3,5-dione, octane-2,4-dione, nonane-2,4-dione, 5-methylhexane-2,4-dione or the like may be exemplified; and as the α-hydroxyester compound, glycolic acid, lactic acid or the like may be exemplified.

As for the σ-bonding ligand, specifically, a halogeno group, an alkoxy group, an acyloxy group or the like may be exemplified.

As for the Lewis base, amines, ethers, phosphines or the like may be exemplified. As for the amines, ammonia, methylamine, aniline, dimethylamine, diethylamine, N-methylaniline, diphenylamine, N,N-dimethylaniline, trimethylamine, triethylamine, tri-n-butylamine, pyridine or the like may be exemplified; as the ethers, diethyl ether, tetrahydrofuran or the like may be exemplified; and as phosphines, triethylphosphine, triphenylphosphine, diphenylphosphine or the like may be exemplified.

As for the zirconium complex, specifically, tetrakis(2,4-pentanedionato)zirconium, tributoxy(2,4-pentanedionato)zirconium or the like may be exemplified.

The zirconium complex of the present invention preferably has an average particle size of 20 nm or less, and more preferably 10 nm or less. This may improve the transparency of the organic-inorganic hybrid.

(3) Condensate of organosilicon compound represented by formula (I)

The condensate of an organosilicon compound represented by the formula (I) constituting the organic-inorganic hybrid forming composition according to the present invention is obtained by condensing the organosilicon compound represented by the formula (I) in the presence of a zirconium complex.

Particularly, the condensate of an organosilicon compound may be prepared by dissolving the organosilicon compound, if necessary with an organic solvent, and subjecting to a (partial) hydrolysis reaction and a condensation reaction, with a predetermined amount of water added thereto in the presence of a zirconium complex.

The organic solvent used is not particularly limited and as the organic solvent, aromatic hydrocarbons such as benzene, toluene and xylene; aliphatic hydrocarbons such as hexane and octane; cycloaliphatic hydrocarbons such as cyclohexane and cyclopentane; ketones such as acetone, methyl ethyl ketone and cyclohexanone; ethers such as tetrahydrofuran and dioxane; esters such as ethyl acetate and butyl acetate; amides such as N,N-dimethylformamide and N,N-dimethylacetamide; sulfoxides such as dimethylsulfoxide; alcohols such as methanol, ethanol and isopropyl alcohol; and polyhydric alcohol derivatives such as ethylene glycol monomethyl ether and ethylene glycol monomethyl ether acetate, or the like may be exemplified. These solvents may be used alone or used by combination of two or more thereof.

The blended amount of the organosilicon compound is 2 to 98% by mass, preferably 5 to 50% by mass, and more preferably 5 to 30% by mass with respect to the total solid content in the organic-inorganic hybrid forming composition.

The added amount of the zirconium complex depends on the type thereof, but the metal atom in the zirconium complex is generally 0.01 to 0.5 molar equivalent, and preferably 0.05 to 0.2 molar equivalent with respect to Si in the organosilicon compound.

The predetermined amount of water is 0.1 to 5 moles, and preferably 0.5 to 3 moles with respect to 1 mole of the organosilicon compound.

The temperature during the reaction is from 10 to 100°C, and preferably from 20 to 80°C. The reaction time is 1 to 100 hours, and preferably 8 to 80 hours.

The average particle size of the condensate of an organosilicon compound is preferably 2 nm to 100 nm, and more preferably 5 nm to 30 nm. When the average particle size is larger than 100 nm, the organic-inorganic hybrid forming composition itself is unstable and is easy to gel and the resulting organic-inorganic hybrid becomes cloudy. When the average particle size is smaller than 2 nm, the coating properties may be adversely affected.

(4) Electromagnetic ray-curable compound

The electromagnetic ray-curable compound used in the present invention is a compound or a resin having a functional group which causes a polymerization reaction by irradiation with the electromagnetic rays.

As the electromagnetic rays, ultraviolet -rays, X-rays, radiation, ionizing radiation and ionizable radiation ($\alpha$-ray, $\beta$-ray, $\gamma$-ray, neutron beam and electron beam) can be used, and light comprising wavelengths of 350 nm or less is preferred.

The electromagnetic rays may be irradiated by using any known device such as an extra-high pressure mercury lamp, a high pressure mercury lamp, a low pressure mercury lamp, a metal halide lamp, an excimer lamp, a carbon arc lamp and a xenon arc lamp. The light source for irradiation is preferably a light source emitting light comprising light of any wavelength in the range of 150 to 350 nm, and more preferably a light source emitting light comprising light of any wavelength in the range of 250 to 310 nm.

The irradiation light amount of light irradiated to sufficiently cure the organic-inorganic hybrid forming composition is about 0.1 to 100 J/cm$^2$, but considering the curing efficiency of the composition (the relationship between the irradiation energy and the degree of cure of the composition), is preferably about 0.4 to 10 J/cm$^2$, and more preferably about 0.4 to 5 J/cm$^2$.

As the electromagnetic ray-curable compound, a vinyl compound including a (meth)acrylate-based compound, an epoxy resin or the like may be exemplified. The number of functional groups which causes the polymerization reaction by irradiation with the electromagnetic rays is not particularly limited, as long as it is one or more.

As for the (meth)acrylate-based compound, specifically, polyurethane (meth)acrylate, polyester (meth)acrylate, epoxy (meth)acrylate, polyamide (meth)acrylate, polybutadiene (meth)acrylate, polystyryl (meth)acrylate, polycarbonate diacrylate, tripropylene glycol di(meth)acrylate, hexanediol di(meth)acrylate, trimethylolpropane tri(meth)acrylate, pentaerythritol tri(meth)acrylate, dipentaerythritol hexa(meth)acrylate, a siloxane polymer having a (meth)acryloyloxy group or the like may be exemplified, but polyester (meth)acrylate, polyurethane (meth)acrylate or epoxy poly(meth)acrylate is preferred and polyurethane (meth)acrylate is more preferred.

Epoxy (meth)acrylate may be obtained by esterification reaction of an oxirane ring of bisphenol-type epoxy resin or novolac epoxy resin having a low molecular weight and acrylic acid.

Polyester (meth)acrylate is obtained by esterifying a hydroxyl group of a polyester oligomer having a hydroxyl group at both ends, which is obtained by condensation of a polyvalent carboxylic acid and a polyhydric alcohol, with acrylic acid. Alternatively, polyester (meth)acrylate is obtained by esterifying a terminal hydroxyl group of an oligomer, which is obtained by adding alkylene oxide to a polyvalent carboxylic acid, with acrylic acid.

Urethane (meth)acrylate is a reaction product of an isocyanate compound obtained by reacting a polyol and a diisocyanate and an acrylate monomer having a hydroxyl group, and as the polyol, polyester polyol, polyether polyol, polycarbonate diol or the like may be exemplified.

As for the vinyl compound other than the acrylate-based compound, N-vinylpyrrolidone, N-vinylcaprolactam, vinyl acetate, styrene, an unsaturated polyester or the like may be exemplified, and as the epoxy resin, hydrogenated bisphenol A diglycidyl ether, 3,4-epoxycyclohexylmethyl-3,4-epoxycyclohexane carboxylate, 2-(3,4-epoxycyclohexyl-5,5-spiro-3,4-epoxy)cyclohexane-meta-dioxane, bis(3,4-epoxycyclohexylmethyl)adipate or the like may be exemplified.

The molecular weight of the electromagnetic ray-curable compound is not limited, as long as it is soluble in the organic-inorganic hybrid forming composition, but it is usually 500 to 50,000, and preferably 1,000 to 10,000 as the mass average molecular weight.

The blended amount of the electromagnetic ray-curable compound is 2 to 98% by mass and preferably 5 to 95% by mass with respect to the total solid content in the organic-inorganic hybrid forming composition.

(5) Combination of organosilicon compound and electromagnetic ray-curable compound based on solubility parameter obtained by Fedors' estimation method

At least one of the organosilicon compounds represented by the formula (I) used in the present invention is preferably an organosilicon compound having a solubility parameter (SP1) of R obtained by Fedors' estimation method which is 1.6 or more smaller than a solubility parameter (SP2) of the electromagnetic ray-curable compound obtained by Fedors' estimation method. The difference between SP1 and SP2 is preferably 1.6 to 8.5, and more preferably 1.6 to 7.2.

The organosilicon compound used in the present invention varies depending on the type of electromagnetic ray-curable compound used. Since the solubility parameter (SP value) for each of the organosilicon compound and the electromagnetic ray-curable compound may be calculated based on Fedors' estimation method, the combination of the organosilicon compound and the electromagnetic ray-curable compound may be determined based on the previously calculated SP values.

In the formula (I), when n is 2 and R is different from each other, the combination thereof with the electromagnetic ray-curable compound is determined by using the SP value having the larger numerical value as the above SP1.

Examples of the organosilicon compounds which may be used in the present invention are listed together with their SP value in the following Table 1.

[Table 1]

| No. | Compound Name | SP Value |
|---|---|---|
| 1 | Vinyltrichlorosilane | 7.00 |
| 2 | Vinyltrimethoxysilane | 7.00 |
| 3 | Vinyltriethoxysilane | 7.00 |
| 4 | Vinyltributoxysilane | 7.00 |
| 5 | Vinyltriisopropoxysilane | 7.00 |
| 6 | Allyltrimethoxysilane | 7.47 |
| 7 | 3-Butenyltrimethoxysilane | 7.72 |
| 8 | Divinyldiaminosilane | 7.00 |
| 9 | Divinyldichlorosilane | 7.00 |
| 10 | Divinyldiacetoxysilane | 7.00 |
| 11 | Divinyldimethoxysilane | 7.00 |
| 12 | Diallyldimethoxysilane | 7.47 |
| 13 | Di-3-butenyldimethoxysilane | 7.72 |
| 14 | Vinylmethyldimethoxysilane | 7.00 |

(continued)

| No. | Compound Name | SP Value |
|---|---|---|
| 15 | Vinylethyldiethoxysilane | 7.00 |
| 16 | Methyltri(meth)acryloxysilane | 5.80 |
| 17 | Methyltris[2-(meth)acryloxyethoxy]silane | 5.80 |
| 18 | Methyltriglycidyloxysilane | 5.80 |
| 19 | Methyltris(3-methyl-3-oxetanemethoxy)silane | 5.80 |
| 20 | Methyltrichlorosilane | 5.80 |
| 21 | Methyltrimethoxysilane | 5.80 |
| 22 | Methyltriethoxysilane | 5.80 |
| 23 | Methyltributoxysilane | 5.80 |
| 24 | Ethyltrimethoxysilane | 6.82 |
| 25 | Ethyltriisopropoxysilane | 6.82 |
| 26 | Ethyltri(n-butoxy)silane | 6.82 |
| 27 | n-Butyltrimethoxysilane | 7.55 |
| 28 | Dimetyldiaminosilane | 5.80 |
| 29 | Dimethyldichlorosilane | 5.80 |
| 30 | Diemthyldiacetoxysilane | 5.80 |
| 31 | Dimethyldimethoxysilane | 5.80 |
| 32 | Di-n-butyldimethoxysilane | 7.55 |
| 33 | 2-Cyclopropenyltrimethoxysilane | 10.50 |
| 34 | 2-Cyclopentenyltrimethoxysilane | 9.49 |
| 35 | Trifluoromethyltrimethoxysilane | 9.82 |
| 36 | Phenyltrimethoxysilane | 10.34 |
| 37 | Diphenyldimethoxysilane | 10.34 |
| 38 | Pentafluorophenyltrimethoxysilane | 12.17 |
| 39 | 4-Oxacyclohexyltrimethoxysilane | 9.72 |
| 40 | 2-(3,4-Epoxycyclohexyl)ethyltrimethoxysilane | 10.62 |
| 41 | 3-Glycidyloxy-n-propylmethyldiethoxysilane | 9.78 |
| 42 | 3-Glycidyloxy-n-propyltrimethoxysilane | 9.78 |
| 43 | 3-Glycidyloxy-n-propyltriethoxysilane | 9.78 |
| 44 | 3-Methacryloxy-n-propylmethyldimethoxysilane | 9.48 |
| 45 | 3-Methacryloxy-n-propyltrimethoxysilane | 9.48 |
| 46 | 3-Methacryloxy-n-propylmethyldiethoxysilane | 9.48 |
| 47 | 3-Methacryloxy-n-propyltriethoxysilane | 9.48 |
| 48 | 3-Acryloxy-n-propyltrimethoxysilane | 9.56 |
| 49 | N-(2-Aminoethyl)-3-amino-n-propylmethyldimethoxysilane | 10.23 |
| 50 | N-(2-Aminoethyl)-3-amino-n-propyltrimethoxysilane | 10.23 |
| 51 | N-(2-Aminoethyl)-3-amino-n-propyltriethoxysilane | 10.23 |
| 52 | 3-Amino-n-propyltrimethoxysilane | 9.85 |

(continued)

| No. | Compound Name | SP Value |
|---|---|---|
| 53 | 3-Amino-n-propyltriethoxysilane | 9.85 |
| 54 | N-Phenyl-3-amino-n-propyltrimethoxysilane | 10.30 |

Then, SP values of representative electromagnetic ray-curable compounds that may be used in the present invention are listed in Table 2.

[Table 2]

| [Acrylate-based compounds] | SP Value |
|---|---|
| Tripropylene glycol diacrylate | 9.3 |
| Tripropylene glycol dimethacrylate | 9.3 |
| 1,6-Hexanediol diacrylate | 9.5 |
| 1,6-Hexanediol dimethacrylate | 9.4 |
| Trimethylolpropane triacrylate | 9.8 |
| Trimethylolpropane trimethacrylate | 9.7 |
| Pentaerythritol triacrylate | 11.5 |
| Pentaerythritol trimethacrylate | 11.1 |
| Dipentaerythritol hexaacrylate | 10.4 |
| Dipentaerythritol hexamethacrylate | 10.2 |
| [Epoxy-based compounds] | SP Value |
| Hydrogenated bisphenol A diglycidyl ether | 9.9 |
| 3,4-Epoxycyclohexylmethyl-3,4-epoxycyclohexane carboxylate | 12.0 |
| 2-(3,4-Epoxycyclohexyl)-5,5-spiro(3,4-epoxy) cyclohexane-m-dioxane | 12.2 |
| Bis(3,4-epoxycyclohexylmethyl)adipate | 10.8 |
| [Vinyl compounds other than acrylate-based compounds] | SP Value |
| N-Vinyl-2-pyrrolidone | 10.8 |
| N-Vinylcaprolactam | 10.2 |
| Vinyl acetate | 8.9 |
| Styrene | 9.2 |

For the acrylate-based compounds, other than the above-mentioned compounds, such as polyurethane(meth)acrylate, polyester (meth)acrylate, epoxy poly(meth)acrylate, polyamide (meth)acrylate, polybutadiene (meth)acrylate, polystyryl (meth)acrylate, polycarbonate diacrylate and the like, the SP values depend on the type of functional groups contained therein, but are within the range of 9 to 11.

In the present invention, when the electromagnetic ray-curable compound is a (meth)acrylate-based compound, the combination of the organosilicon compounds (Si1) and (Si2) is preferably a combination of vinyltrimethoxysilane and 3-methacryloxy-n-propyltrimethoxysilane, a combination of vinyltrimethoxysilane and 3-glycidyloxy-n-propyltrimethoxysilane, and the like.

(6) Photopolymerization initiator

The photopolymerization initiator used in the present invention is any compound which generates active radical species by irradiation with light comprising wavelengths of 350 nm or less, or the like.

As for the compound which generates active radical species by light irradiation, specifically, acetophenone, acetophenone benzyl ketal, 1-hydroxycyclohexyl phenyl ketone, 2,2'-dimethoxy-1,2-diphenylethan-1-one, xanthone, fluorenone, benzaldehyde, fluorene, anthraquinone, triphenylamine, carbazole, 3-methylacetophenone, 4-chlorobenzophenone, 4,4'-dimethoxybenzophenone, 4,4'-diaminobenzophenone, benzoin propyl ether, benzoin ethyl ether, benzyl dimethyl ketal, 1-(4-isopropylphenyl)-2-hydroxy-2-methylpropan-1-one, 2-hydroxy-2-methyl-1-phenylpropan-1-one, thioxanthone, diethylthioxanthone, 2-isopropylthioxanthone, 2-chlorothioxanthone, 2-methyl-1-[4-(methylthio)phenyl]-2-morpholino-propan-1-one, 2-benzyl-2-dimethylamino-1-(4-morpholinophenyl)-butanone-1,4-(2-hydroxyethoxy)pheny1-(2-hydroxy-2-propyl)ketone, 2,4,6-trimethylbenzoyldiphenylphosphine oxide, bis-(2,6-dimethoxybenzoyl)-2,4,4-trimethylpentylphosphine oxide, oligo(2-hydroxy-2-methyl-1-(4- (1-methylvinyl)phenyl)propanone) or the like may be exemplified.

The added amount of the photopolymerization initiator used in the present invention is preferably 0.01 to 20% by mass, and more preferably 0.1 to 10% by mass, with respect to the solid content of the electromagnetic ray-curable compound.

(7) Method for preparing the organic-inorganic hybrid forming composition

The organic-inorganic hybrid forming composition according to the present invention may be prepared by mixing a photopolymerization initiator and an electromagnetic ray-curable compound with the condensate of the organosilicon compound previously prepared. At that time, if necessary, a solvent such as water or an organic solvent may be added.

The organic solvent used is not particularly limited, and as for the organic solvent, aromatic hydrocarbons such as benzene, toluene and xylene; aliphatic hydrocarbons such as hexane and octane; cycloaliphatic hydrocarbons such as cyclohexane and cyclopentane; ketones such as acetone, methyl ethyl ketone, cyclohexanone and methyl isobutyl ketone; ethers such as tetrahydrofuran and dioxane; esters such as ethyl acetate and butyl acetate; amides such as N,N-dimethylformamide and N,N-dimethylacetamide; sulfoxides such as dimethylsulfoxide; alcohols such as methanol and ethanol; polyhydric alcohol derivatives such as ethylene glycol monomethyl ether and ethylene glycol monomethyl ether acetate; or the like may be exemplified. These solvents may be used alone or used by combination of two or more thereof.

(8) Organic-inorganic hybrid and production method thereof

The organic-inorganic hybrid of the present invention is obtained by curing the above-mentioned organic-inorganic hybrid forming composition. Preferably, it is an organic-inorganic hybrid thin film formed from the organic-inorganic hybrid forming composition on a predetermined substrate.

As for the substrate on which the organic-inorganic hybrid of the present invention may be formed, metals, ceramics, glass, plastics or the like may be exemplified. Among them, plastics are preferred, and specifically, plastic substrates for touch panels or the like may be exemplified. Conventionally, it has been difficult to form a thin film on a plastic substrate, and the substrate has been limited to an inorganic substrate such as glass. However, the thin film of the present invention may be easily formed even on a plastic substrate on which the thin film is difficult to be formed, ant it is also suitable for plastic optical components. As such a plastic substrate, a polycarbonate resin substrate, an acrylic resin substrate, a polyimide resin substrate, a polyester resin substrate, an epoxy resin substrate, a liquid crystal polymer resin substrate, a polyether sulfone substrate or the like may be exemplified.

The organic-inorganic hybrid forming composition may be applied on the substrate by using any known coating method. As the coating method, a dipping method, a spraying method, a bar coating method, a roll coating method, a spin coating method, a curtain coating method, a gravure printing method, a silk screen method, an ink jet method or the like may be exemplified. The film thickness of the thin film formed is not particularly limited, and is for example about 0.05 to 200 $\mu$m.

The drying treatment of the thin film formed by applying the organic-inorganic hybrid forming composition is preferably carried out, for example, at 40 to 200°C for 1 to 120 minutes, and more preferably at 60 to 120°C for 3 to 60 minutes.

As for the method of curing the organic-inorganic hybrid of the present invention, a method of irradiating the above-mentioned organic-inorganic hybrid forming composition with light comprising wavelengths of 350 nm or less may be exemplified.

Irradiation of light comprising wavelengths of 350 nm or less may be carried out, for example, by using any known device such as a high pressure mercury lamp, a low pressure mercury lamp, a metal halide lamp and an excimer lamp. The irradiation light is preferably light comprising light of any wavelength in the range of 150 to 350 nm, and more preferably light comprising light of any wavelength in the range of 250 to 310 nm. The organic-inorganic hybrid forming composition is hardly affected by sunlight, as long as it is responsive to light comprising such a range of wavelengths but is not responsive to light comprising wavelengths longer than 350 nm and preferably is not responsive to light comprising wavelengths longer than 310 nm. As the irradiation light amount of light irradiated, about 0.1 to 100 J/cm$^2$ may be exemplified, and considering the curing efficiency (the relationship between the irradiation energy and the degree of cure), the irradiation light amount is preferably about 0.2 to 20 J/cm$^2$, and more preferably about 0.4 to 10 J/cm$^2$.

Irradiation with light of wavelengths of 350 nm or less refers to irradiation using a light source emitting light comprising light of any wavelength of 350 nm or less, preferably irradiation using a light source emitting light mainly comprising light of any wavelength of 350 nm or less.

The organic-inorganic hybrid of the present invention has a condensate of an organosilicon compound, which is an inorganic component during the formation process, segregated on the surface portion. The electromagnetic ray-curable compound which is an organic component is relatively reduced in the surface portion. Therefore, in the surface portion, the carbon concentration becomes lower than that in the inner portion, and the silicon concentration becomes higher conversely. That is, the surface side becomes more mineralized than the inner side, and the surface side has high hardness.

Therefore, the organic-inorganic hybrid forming composition of the present invention may be applied to a substrate and cured to obtain a laminate having high hardness on its surface side.

**Examples**

Hereinafter, the present invention will be described in more detail with reference to examples, but the technical scope of the present invention is not limited to these examples.

[Reference Example 1]

(Preparation of condensate of organosilicon compound)

An eggplant type flask equipped with a stirrer was provided, and 519 mg (1.07 mmol) of tetrakis(2,4-pentanedionato)zirconium was added thereto, followed by addition thereto of 181 mg of isopropyl alcohol and 1937 mg of industrial ethanol ("Solmix (registered trademark) AP-7", manufactured by Japan Alcohol Trading Co., Ltd.) as a solvent. Then, 1084 mg (7.56 mmol) of vinyltrimethoxysilane ("KBM-1003", manufactured by Shin-Etsu Chemical Co., Ltd.) and 741 mg (2.98 mmol) of 3-methacryloxypropyltrimethoxysilane ("KBM-503", manufactured by Shin-Etsu Chemical Co., Ltd.) were added thereto and was stirred at room temperature for 30 minutes. Thereafter, 565 mg of ultrapure water was added dropwise thereto and was heated and stirred at 60°C for 72 hours. Then, the mixture was cooled to room temperature to obtain a condensate of an organosilicon compound [A-1].

[Reference Comparative Example 1]

A condensate of an organosilicon compound [RA-1] was prepared in the same manner as in Reference Example 1 except that tetrakis(2,4-pentanedionato)zirconium in the preparation of [A-1] in Example 1 was changed to diisopropoxy-bis(acetylacetonato)titanium ("T-50", manufactured by Nippon Soda Co., Ltd.) having the same number of moles as the former.

[Example 1]

(Preparation of organic-inorganic hybrid forming composition)

An eggplant type flask equipped with a stirrer was provided, and 3.5 g of a urethane acrylate oligomer ("UV 1700 B", manufactured by The Nippon Synthetic Chemical Industry Co., Ltd.) was added thereto and then dissolved in 5.1 g of methyl isobutyl ketone. 0.19 g of 2-methyl-1-(methylthiophenyl)-2-morpholinopropan-1-one ("Irgcure (registered trademark) 907", manufactured by BASF) as a photopolymerization initiator was added to this solution. Thereafter, 1.27 g of the condensate of the organosilicon compound [A-1] prepared in Reference Example 1 was added, followed by stirring at room temperature for 1 hour to obtain an organic-inorganic hybrid forming composition [B-1].

[Example 2]

An organic-inorganic hybrid forming composition [B-2] was prepared in the same manner as in Example 1 except that the photopolymerization initiator in the preparation of [B-1] in Example 1 was changed to 2,2'-dimethoxy-1,2-diphenylethan-1-one ("Irgacure (registered trademark) 651", manufactured by BASF).

[Comparative Example 1]

An organic-inorganic hybrid forming composition [RB-1] was prepared in the same manner as in Example 1 except that the condensate of the organosilicon compound in the preparation of [B-1] in Example 1 was changed to [RA-1] prepared in Reference Comparative Example 1.

[Example 3]

(Formation of laminate)

The organic-inorganic hybrid forming composition [B-1] obtained in Example 1 was bar coated on a white acrylic substrate as a substrate in a thickness of about 6 $\mu$m. The coated white acrylic substrate was heated at 80°C for 3 minutes in a hot air circulation type drier, and then irradiated with ultraviolet light from a condensing type high pressure mercury lamp (UV light mainly comprising light having wavelengths of 365 nm, 313 nm and 254 nm; 1 lamp type, 120 W/cm, lamp height: 9.8 cm, conveyor speed: 4.6 m/min; manufactured by EYE GRAPHICS Co., Ltd.) in the cumulative irradiation amount of 400 mJ/cm$^2$ to obtain a substrate having an organic-inorganic hybrid formed thereon (laminate of the present invention) [C-1].

[Example 4]

A substrate having an organic-inorganic hybrid formed thereon [C-2] was prepared in the same manner as in Example 3 except that the organic-inorganic hybrid forming composition [B-2] was used instead of the organic-inorganic hybrid forming composition [B-1] in the preparation of [C-1] of Example 3.

[Comparative Example 2]

A substrate having an organic-inorganic hybrid formed thereon [RC-1] was prepared in the same manner as in Example 3 except that the composition for forming an organic-inorganic hybrid [RB-1] was used instead of the organic-inorganic hybrid forming composition [B-1] in the preparation of [C-1] of Example 3.

[Evaluation of coloring]

The obtained substrates [C-1], [C-2] and [RC-1] were subjected to the following evaluation.
In order to investigate the coloring degree of the substrate [C-1], the substrate [C-2], the substrate [RC-1] and the untreated substrate, b* value (yellow tint) was measured by using a turbidity/color meter (COH 400, Nippon Denshoku Industries Co., Ltd). The results are shown in Table 3 below. It was found that coloring of [C-1] and [C-2] of the present invention was reduced as compared with [RC-1].

[Table 3]

| Substrate having organic-inorganic hybrid formed thereon | b* Value |
| --- | --- |
| [C-1] | -5.36 |
| [C-2] | -6.22 |
| [RC-1] | -5.08 |
| Untreated substrate | -7.40 |

[Example 5]

(Preparation of organic-inorganic hybrid forming composition)

An eggplant type flask equipped with a stirrer was provided, and 11.79 g of tributoxy(2,4-pentanedionato)zirconium ("ZRCAT", manufactured by Nippon Soda Co., Ltd.) was added thereto, followed by addition thereto of 22.45 g of industrial ethanol ("Solmix (registered trademark) AP-7", manufactured by Japan Alcohol Trading Co., Ltd.) as a solvent. Then, 20.27 g of vinyltrimethoxysilane ("KBM-1003", manufactured by Shin-Etsu Chemical Co., Ltd.,) and 14.56 g of 3-methacryloxypropyltrimethoxysilane ("KBM-503", manufactured by Shin-Etsu Chemical Co., Ltd.) were added thereto and stirred at room temperature for 5 minutes. Thereafter, 10.93 g of ultrapure water was added dropwise thereto and was heated and stirred at 70°C for 6 hours. Then, the mixture was cooled to room temperature to obtain a condensate of an organosilicon compound [D-1].
An eggplant type flask equipped with a stirrer was provided, and 43.40 g of a urethane acrylate resin ("BPZA-66", manufactured by Kyoeisha Chemical Co., Ltd.) was added thereto and then dissolved in 22.36 g of methyl isobutyl ketone. 1.39 g of 1-hydroxy-cyclohexyl-phenyl-ketone ("Irgcure (registered trademark) 184", manufactured by BASF) was added as a photopolymerization initiator to this solution. Thereafter, 12.86 g of the condensate of the organosilicon compound [D-1] previously prepared was added, followed by stirring at room temperature for 1 hour to obtain an organic-inorganic hybrid forming composition [E-1].

[Example 6]

(Formation of laminate)

The solution for forming an organic-inorganic hybrid [E-1] obtained above was bar coated on a white acrylic substrate in a thickness of about 6 $\mu$m. The coated white acrylic substrate was heated at 80°C for 3 minutes in a hot air circulation type drier, and then irradiated with ultraviolet light from a condensing type high pressure mercury lamp (UV light mainly comprising light having wavelengths of 365 nm, 313 nm and 254 nm; 1 lamp type, 120 W/cm, lamp height: 9.8 cm, conveyor speed: 4.6 m/min; manufactured by EYE GRAPHICS Co., Ltd.) in the cumulative irradiation amount of 400 mJ/cm$^2$ to obtain a substrate having an organic-inorganic hybrid formed thereon [F-1].

[Evaluation of coloring]

In order to investigate the coloring degree of the substrate [F-1], the substrate [RC-1] and the untreated substrate, b* value (yellow tint) was measured by using a turbidity/color meter (COH 400, Nippon Denshoku Industries Co., Ltd.).

The results are shown as $\Delta b*$ = (b* of untreated substrate) - (b* of substrate having organic-inorganic hybrid formed thereon) are shown in Table 4.

It was found that coloring of [F-1] of the present invention was reduced as compared with [RC-1].

[Table 4]

|  | $\Delta b*$ |
|---|---|
| F-1 | 1.23 |
| RC-1 | 2.32 |

**Claims**

1. An organic-inorganic hybrid forming composition comprising:

   a) a condensate of an organosilicon compound represented by the formula (I):

   $$R_nSiX_{4-n} \qquad (I)$$

   (wherein R represents an organic group having a carbon atom directly bonded to Si in the formula; X each independently represents a hydroxyl group or a hydrolyzable group; and n represents 1 or 2, and when n is 2, each R is the same or different),
   which is obtained by condensing the organosilicon compound represented by the formula (I) in the presence of a zirconium complex;
   b) an electromagnetic ray-curable compound; and
   c) a photopolymerization initiator.

2. The organic-inorganic hybrid forming composition according to claim 1, wherein at least one of the organosilicon compounds represented by the formula (I) is an organosilicon compound represented by the formula (I-1) :

   $$R^1_nSiX_{4-n}\cdots \qquad (I-1)$$

(wherein n represents 1 or 2, and when n is 2, each $R^1$ is the same or different; $R^1$ represents an organic group having a carbon atom directly bonded to Si in the formula, and at least one $R^1$ represents a vinyl group-containing hydrocarbon group; and X each independently represents a hydroxyl group or a hydrolyzable group).

3. The organic-inorganic hybrid forming composition according to claim 2, wherein the organosilicon compound represented by the formula (I) consists of:

at least one organosilicon compound represented by the formula (I-1):

$$R^1{}_nSiX_{4-n}\cdots \qquad (I\text{-}1)$$

(wherein n represents 1 or 2, and when n is 2, each $R^1$ is the same or different; $R^1$ represents an organic group having a carbon atom directly bonded to Si in the formula, and at least one $R^1$ represents a vinyl group-containing hydrocarbon group; and X each independently represents a hydroxyl group or a hydrolyzable group); and
at least one organosilicon compound represented by the formula (1-2):

$$R^2{}_nSiX_{4-n}\cdots \qquad (I\text{-}2)$$

(wherein n represents 1 or 2, and when n is 2, each $R^2$ is the same or different; $R^2$ represents an organic group, other than a vinyl group-containing hydrocarbon group, having a carbon atom directly bonded to Si in the formula; and X each independently represents a hydroxyl group or a hydrolyzable group),

in an amount satisfying the equation (1):

```
30 mol% ≤ {[Compound of formula (I-1)]} / {[Compound of
formula (I-1)] + [Compound of formula (I-2)]} × 100 < 100
mol%···(1).
```

4. The organic-inorganic hybrid forming composition according to claim 1, wherein at least one of the organosilicon compounds represented by the formula (I) is an organosilicon compound having a solubility parameter (SP1) of R obtained by Fedors' estimation method which is 1.6 or more smaller than a solubility parameter (SP2) of the electromagnetic ray-curable compound obtained by Fedors' estimation method.

5. An organic-inorganic hybrid obtained by curing the organic-inorganic hybrid forming composition according to any one of claims 1 to 4.

6. A laminate obtained by applying the organic-inorganic hybrid forming composition according to any one of claims 1 to 4 to a substrate and curing the composition.

## INTERNATIONAL SEARCH REPORT

International application No.

PCT/JP2016/002875

**A. CLASSIFICATION OF SUBJECT MATTER**

*C08F290/06*(2006.01)i, *B32B27/00*(2006.01)i, *C08F299/08*(2006.01)i,
*C08G77/08*(2006.01)i, *C09D4/00*(2006.01)i, *C09D7/12*(2006.01)i, *C09D183/04*
(2006.01)i, *C09D183/05*(2006.01)i, *C09D183/07*(2006.01)i

According to International Patent Classification (IPC) or to both national classification and IPC

**B. FIELDS SEARCHED**

Minimum documentation searched (classification system followed by classification symbols)

C08F290/06, B32B27/00, C08F299/08, C08G77/08, C09D4/00, C09D7/12,
C09D183/04, C09D183/05, C09D183/07

Documentation searched other than minimum documentation to the extent that such documents are included in the fields searched

Jitsuyo Shinan Koho        1922–1996    Jitsuyo Shinan Toroku Koho    1996–2016
Kokai Jitsuyo Shinan Koho   1971–2016    Toroku Jitsuyo Shinan Koho    1994–2016

Electronic data base consulted during the international search (name of data base and, where practicable, search terms used)

CAplus/REGISTRY(STN)

**C. DOCUMENTS CONSIDERED TO BE RELEVANT**

| Category* | Citation of document, with indication, where appropriate, of the relevant passages | Relevant to claim No. |
|---|---|---|
| X | JP 2013-108050 A  (Nippon Soda Co., Ltd.), 06 June 2013 (06.06.2013), paragraph [0113] (Family: none) | 1-6 |
| X<br>A | WO 2006/088079 A1  (Nippon Soda Co., Ltd.), 24 August 2006 (24.08.2006), claims 1, 10, 11; paragraphs [0003], [0017], [0046], [0061] to [0063], [0075] & US 2009/0025610 A1 example 5 & EP 1849835 A1           & CN 101120055 A | 1-3,5,6<br>4 |

☐ Further documents are listed in the continuation of Box C.       ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 29 July 2016 (29.07.16) | 09 August 2016 (09.08.16) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (January 2015)

**EP 3 315 523 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015125781 A
- JP 10195417 A
- WO 2006088079 A
- WO 2008069217 A